# EUROPÄISCHE PATENTANMELDUNG

(11) **EP 1 313 302 A2**
(43) Veröffentlichungstag der Anmeldung: **21.05.2003**
(21) Anmeldenummer: 02025738.2
(22) Anmeldetag: 15.11.2002
(51) Int. Cl.: H04M 11/02, H04M 1/60, H04M 1/253

(54) **Kommunikationsendgerät und Verfahren zum Betrieb eines solchen**

(30) Priorität: 16.11.2001 DE 10156361; 17.12.2001 DE 10161950
(71) Anmelder: Tenovis GmbH & Co. KG, 60326 Frankfurt (DE)
(72) Erfinder: Döbold, Herbert, 59769 Köln (DE); Drehsen, Axel, 53844 Troisdorf (DE); Hüllenhütter, Hans-Günther, 50997 Köln (DE); Prüter, Dirk, 51143 Köln (DE); Schmitz, Werner, 50827 Köln (DE)
(74) Vertreter: Heinze, Ekkehard, Dipl.-Phys. Dr.

(57) **Zusammenfassung**

Kommunikationsendgerät (11) zur kombinierten Sprach- und Lichtrufkommunikation, insbesondere Patientenendgerät für den Klinikeinsatz oder Zimmerendgerät für den Wohnheimeinsatz, mit einer integrierten Freisprecheinrichtung, zum Anschluß an eine digitale Telekommunikationsanlage (3), wobei die Freisprecheinrichtung über die Telekommunikationsanlage mindestens zum Aufbau einer Sprechverbindung mit einem weiteren an die Telekommunikationsanlage angeschlossenen Endgerät oder System (19, 21) steuerbar ist.

## Beschreibung

Die Erfindung betrifft ein Kommunikationsendgerät zur kombinierten Sprach- und Lichtrufkommunikation, insbesondere als Patientenendgerät für den Klinikeinsatz oder Zimmerendgerät für den Wohnheimeinsatz (etwa in Altenheimen, Seniorenresidenzen oder im Bereich des betreuten Wohnens), ein mit derartigen Kommunikationsendgeräten gebildetes Kommunikationssystem sowie ein Verfahren zum Betrieb eines solchen.

In Kliniken werden seit langem Notrufsysteme eingesetzt, die es dem Patienten auf leichte und schnelle Weise ermöglichen, sich beim Überwachungs- bzw. Pflegepersonal (beispielsweise der Stationsschwester) zu melden, um auf eine problematische Situation hinzuweisen oder aus anderen Gründen Hilfe anzufordern. Derartige Systeme sind traditionell so ausgeführt, daß der Patientenruf ein Lichtsignal an der Zimmertür aktiviert, welches dem Betreuungspersonal auf den ersten Blick die Erkennung des Ursprungsortes des Rufes ermöglicht. Sie werden daher auch als Lichtrufsysteme bezeichnet - auch wenn bei modernen Systemen dieser Art die Erzeugung des besagten Lichtsignals längst nicht mehr der entscheidende Funktionsaspekt ist.

In der klassischen Ausführung ist das "Patientenendgerät" durch einen einfachen Taster gebildet, der über dem Krankenhausbett angebracht ist. Durch das Lichtsignal (Aufleuchten einer Lampe an der Zimmertür) wird bei älteren Systemen die Schwester zuerst einmal an das Bett des Patienten gerufen, um dort von diesem zu hören, warum er gerufen hat. Sie kann dort beispielsweise erfahren, daß der Patient Durst hat und Tee verlangt. Um diesen zu holen, muß sie dann gegebenenfalls wieder ans andere Ende des Klinikflurs zur Teeküche eilen. Hätte sie bereits vorher gewußt, was der Patient braucht oder wie dringend die Anfrage ist, hätte sie den Tee bereits mitgenommen, unterwegs andere, dringendere Pflegearbeiten verrichtet oder einfach die Lernschwester in die Teeküche und zum Patienten geschickt.

Zur Rationalisierung der Arbeitsabläufe in den Kliniken wird daher bereits seit längerem an der Bereitstellung komfortablerer Lichtrufsysteme gearbeitet, die einen Informationsaustausch zwischen Patient und Pflegepersonal ermöglichen. Hierzu gehören zum einen übersichtliche Bildschirmdarstellungen eingehender Rufe auf dem PC und zum anderen zusätzliche Sprechverbindungen.

Bei bekannten, marktgängigen Lichtrufsystemen wird, um derartige Sprechverbindungen zu ermöglichen, eine eigene Kommunikations-Infrastruktur des Lichtrufsystems erstellt. Infolge ihrer historischen Bedingtheiten kann diese Infrastruktur die heute üblichen Leistungsmerkmale moderner Telekommunikationssysteme nur unzureichend verwirklichen. Hinzu kommt, daß die Ansprüche der Patienten an die Lebensqualität in der Klinik ständig gestiegen sind und die Kliniken natürlich versuchen, den gestiegenen Bedürfnissen beispielsweise durch Bereitstellung komfortabler TK-Endgeräte am Patientenbett Rechnung zu tragen. Dies hat dazu geführt, daß in der Praxis verschiedene Endgeräte am Bett des Patienten nebeneinander genutzt werden.

Im Hinblick auf die vielfach eingeschränkten Wahrnehmungs- und Reaktionsmöglichkeiten Kranker ist dies ebenso problematisch wie die Endgeräteintegration verschiedener Systeme, mit denen Sprechverbindungen möglich sind. Eine Mehrzahl von Geräten korrekt zu bedienen, überfordert die Patienten oft ebenso wie die richtige Bedienung eines integrierten Endgerätes mit großer Funktionsvielfalt. Zudem ist auch bei Lösungen, bei denen die Sprachkomponente eines Lichtrufanbieters in ein TK-Endgerät integriert wurde oder umgekehrt, nach den Erkenntnissen der Erfinder kein an Klinikanforderungen angepaßter Funktionsumfang und Bedienkomfort erreicht worden. Als problematisch hat sich zum Beispiel erwiesen, daß der Patient für das Betreuungspersonal nicht per Sprechverbindung erreichbar ist, wenn der Hörer neben dem Telefon liegt oder er gerade ein Telefongespräch führt.

Bekannte Schnittstellen zwischen Lichtrufsystemen und TK-Anlagen werden heutigen Anforderungen und den erweiterten Leistungsmerkmalen moderner TK-Anlagen nicht mehr gerecht. Ihr technologischer Stand entspricht dem der 80er Jahre; es handelt sich um ESPA-V24-Punkt-zu-Punkt-Verbindungen, die insbesondere an die Textübertragung via Pager angepaßt sind. Die Übertragung ist ungesichert und ermöglicht bei Standard-Pagern keine Rückmeldung. Leistungsmerkmale digitaler TK-Anlagen und von mit modernen Displays ausgestatteten Endgeräten werden ebenso wenig berücksichtigt wie der Einsatz von Mobiltelefonen als Endgeräte.

Der Erfindung liegt daher die Aufgabe der Bereitstellung eines verbesserten Kommunikationsendgerätes und -systems der gattungsgemäßen Art zugrunde, welches in allen Anwendungssituationen eine einfache und zuverlässige Kommunikation zwischen Patient und Betreuungspersonal ermöglicht. Weiterhin soll ein geeignetes Betriebsverfahren für ein Klinik-Kommunikationssystem angegeben werden.

Diese Aufgabe wird in ihrem Vorrichtungsaspekt durch Kommunikationsendgeräte mit den Merkmalen der Ansprüche 1 und 7 bzw. ein Kommunikationssystem nach Anspruch 10 und in ihrem Verfahrensaspekt durch Verfahren mit den Merkmalen der Ansprüche 13 oder 15 gelöst. Zweckmäßige Ausgestaltungen des Erfindungsgedankens ergeben sich aus den jeweiligen abhängigen Ansprüchen.

Gemäß einem ersten, relativ selbständigen Aspekt der Erfindung hat das vorgeschlagene Kommunikationsendgerät eine Freisprecheinrichtung, die von der Telekommunikationsanlage aus mindestens zum Aufbau einer Sprechverbindung mit einem weiteren an die Telekommunikationsanlage angeschlossenen Endgerät steuerbar ist. Dieses Gerät wird im folgenden auch als Patienten-Bedienkombination (PBK) bezeichnet, da es neben Kommunikations- auch Bedienfunktionen realisiert. Es handelt sich - insbesondere für den Einsatz im europäischen Raum - zweckmäßigerweise um ein ISDN-Endgerät zum Anschluß an eine ISDN-Nebenstellenanlage oder ein IP-Endgerät (beispielsweise einen PC) zum Anschluß an ein IP-konformes Kommunikationsnetz. In beiden Fällen ist das Endgerät zum Betrieb mit getrennten Signalisierungs- und Sprachkanälen ausgebildet.

Die erwähnten Steuermittel ermöglichen insbesondere zusätzlich die Steuerung der Hör-/Sprech-Lautstärke der Freisprecheinrichtung von dem weiteren Endgerät aus während einer bestehenden Verbindung. Gemäß diesem Aspekt ermöglicht es die Erfindung, unabhängig von durch den Patienten - vielfach unzweckmäßig - vorgenommenen Einstellungen eine klar verständliche Sprachkommunikation im Anschluß an ein Lichtrufsignal zu realisieren.

Gemäß einem zweiten, relativ selbständigen Aspekt der Erfindung hat das Kommunikationsendgerät (Patientenendgerät) eine Anzeigeeinrichtung (ein Display) und dieser zugeordnete Anzeigesteuermittel zur optischen Ausgabe von an dem weiteren Endgerät eingegebenen Textnachrichten. Gemäß diesem Aspekt bietet die Erfindung die Möglichkeit einer zusätzlichen Informationsübermittlung an den Patienten in Reaktion auf sein Lichtrufsignal oder - bei Patienten mit Gehörschäden - überhaupt erst die Möglichkeit einer zweiseitigen Verständigung, ohne daß das Betreuungspersonal sich zum Bett des Patienten begeben muß.

Wesentlich ist, daß bei der vorgeschlagenen Lösung eine Kommunikationsverbindung (insbesondere Sprechverbindung über Freisprecheinrichtung) zu jedem Zeitpunkt erzwungen werden kann - unabhängig vom jeweiligen aktuellen Betriebszustand des Endgerätes beim Patienten bzw. im Wohnraum.

In einer bevorzugten Fortbildung des Erfindungsgedankens ist die Freisprecheinrichtung nach einer Einschaltung von der Telekommunikationsanlage aus am Kommunikationsendgerät ausschaltbar. Hierdurch wird in wünschenswerter Weise die Dispositionsfreiheit des Patienten bzw. Bewohners hinsichtlich der Dauer seiner Verbindung mit dem Betreuungspersonal gewahrt. Weiter bevorzugt ist dabei das Vorhandensein einer Freisprech-Anzeigeeinrichtung zur akustischen oder optischen Anzeige des Ein-Zustandes der Freisprecheinrichtung. Hiermit wird der Patient bzw. Bewohner jederzeit über das Bestehen oder Nicht-Bestehen einer Kommunikationsverbindung mit dem Betreuungspersonal informiert.

Weiter bevorzugt ist eine Ausführung, bei der das patientenoder bewohnerseitige Endgerät eine Sendeeinrichtung zur Meldung des erfolgten Aufbaus einer Sprechverbindung über die Freisprecheinrichtung oder des erfolgten Empfangs einer Textnachricht bei dem Kommunikationsendgerät an das auslösende Endgerät oder System hat. Mit dieser zusätzlichen Einrichtung wird das Betreuungspersonal zuverlässig über das Bestehen einer Kommunikationsverbindung mit dem Zimmer des Patienten oder Bewohners bzw. über den Eingang einer Textnachricht bei diesem informiert. Außerdem kann eine kombinierte Anzeige-/Eingabeeinrichtung zur interaktiven Menuführung des Benutzers zur Beantwortung übermittelter Sprach- oder Textnachrichten bei diesem Endgerät vorgesehen sein. Hierdurch wird den (in vielen Fällen in ihren Wahrnehmungsmöglichkeiten oder Reaktionen beeinträchtigten) Benutzern eine sinnvolle Kommunikation mit dem Betreuungspersonal erleichtert. Während der Menüführung verändern sich selbstverständlich die Anzeigen im Ansprechen auf bestimmte Handlungen (Eingaben) des Benutzers, der Hinweis auf die bestehende Kommunikationsverbindung wird aber im Regelfall aufrechterhalten.

Das vorgeschlagene Kommunikationssystem umfaßt eine Mehrzahl von an eine TK-Anlage angeschlossenen Patientenendgeräten und ein Überwachungs-Endgerät, welches zur Steuerung der Freisprecheinrichtungen der Kommunikationsendgeräte und/oder ihrer Anzeigeeinrichtungen ausgebildet ist. Hierbei hat das Überwachungs-Endgerät insbesondere Steuermittel zur Fernsteuerung der Freisprecheinrichtungen an den Patientenbetten und/oder eine Sendeeinrichtung zur Übermittlung einer Textnachricht an angeschlossene Patientenendgeräte zur Anzeige auf einer dort vorgesehenen Anzeigeeinrichtung, wobei die Sendeeinrichtung mit einer Texteingabe- oder Textspeichereinrichtung verbunden ist. Es können also sowohl auf die konkrete Situation Bezug nehmende Texte für den Patienten von der Aufsichtsperson am Gerät eingegeben als auch Standard-Nachrichten ("komme gleich zu Ihnen", "bitte fünf Minuten warten" etc.) aus dem Textspeicher geladen und an den Patienten übermittelt werden. Dieser erhält somit eine seinen Ruf "lautlos" bestätigende Rückmeldung und kann beruhigend sein, daß man sich um ihn kümmern wird.

Das System kann also ein lokal mehr oder weniger begrenztes (beispielsweise in einem Gebäude installiertes oder über eine Mehrzahl von räumlich benachbarten Gebäuden verteiltes) sein, aber auch weit entfernte Endgeräte umfassen und im Prinzip als weltweit vernetztes System aufgebaut sein.

Das Überwachungsendgerät oder -system ist bevorzugt mit Authentisierungsmitteln zur Authentisierungsprüfung seines Bedieners (des Betreuungspersonals) ausgestattet, um den angeschlossenen Patienten bzw. Bewohnern Sicherheit vor Mitteilungen oder Anweisungen durch Unbefugte zu geben. Hier können an sich bekannten Authentisierungsmechanismen eingesetzt werden, wie etwa ein Paßwort- oder PIN-Zugang oder auch die Authentisierung über eine biometrische Merkmalsanalyse.

Zweckmäßige Aspekte der vorgeschlagenen Verfahren korrespondieren im wesentlichen zu den oben erwähnten Vorrichtungsaspekten, so daß hier keine weitergehenden Erläuterung erforderlich ist.

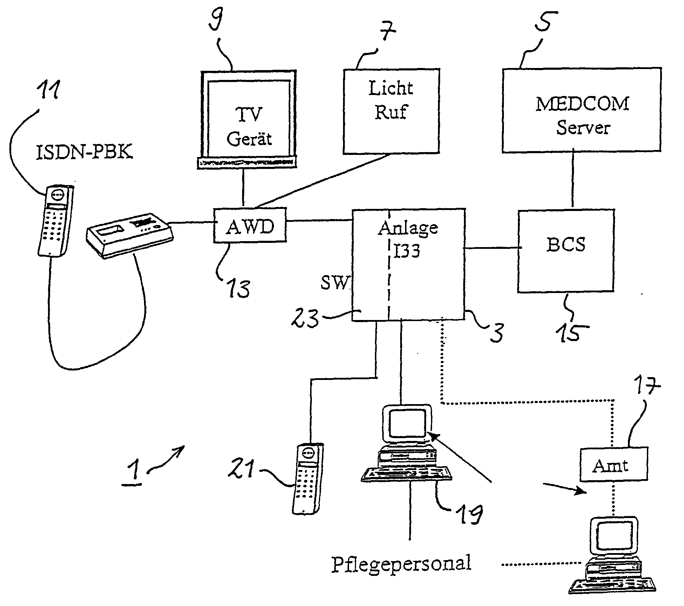

Vorteile und Zweckmäßigkeiten der Erfindung ergeben sich im übrigen aus den Unteransprüchen sowie der nachfolgenden Beschreibung eines bevorzugten Systemaufbaus anhand der einzigen Figur.

Das als Beispiel dargestellte Kommunikationssystem 1 hat als Kernstück eine digitale automatische Nebenstellenanlage 3, die zum einen die Patientenzimmer mit den Räumen des Überwachungs- bzw. Pflegepersonals und zum anderen mit einem Steuerungs-Server (MEDCOM Server) 5 verbindet. Die Ausstattung der Patientenzimmer umfaßt einen Lichtrufgeber 7, ein TV-Gerät 9 und ein Kommunikationsendgerät (ISDN-PBK) 11, die sämtlich an eine aktive Wanddose (AWD) 13 angeschlossen sind. Über diese ist also die gesamte Geräteausstattung der Patientenzimmer mit der Nebenstellenanlage 3 verbunden. Der Steuerungs-Server 5 ist über einen Anpassungs-Server (BCS = Branch Communications Server) 15 mit der Nebenstellenanlage verbunden. Die Nebenstellenanlage verbindet die Patientenzimmer sowohl mit dem Amt 17 als auch mit dem Überwachungs- bzw. Pflegepersonal, wo sich mindestens ein PC 19 und ein zur Überwachung der Lichtruffunktionen und direkten Kommunikation mit den Patienten dienendes Überwachungs-Endgerät 21 befinden.

Die Nebenstellenanlage 3 steuert die Telefonie-Leistungsmerkmale der Kommunikationsendgeräte (ISDN-PBK) 11 im "functional mode" und stellt über User-User-Information im DSS1-Protokoll einen Datentransportmechanismus zwischen den ISDN-PBK und dem Steuerungsserver (MEDCOM Server) 5 zur Verfügung. Als ein Leistungsmerkmal wird das Merkmal "Bettsprechen" über manuelle Fernsteuerung vom Überwachungs-Endgerät 21 aus derart realisiert, daß die Freisprecheinrichtung von dort aus einschaltbar ist. Zudem wird eine Richtungssteuerung der Freisprechwaage verwirklicht, um Patienten zu hören bzw. das Zimmer abzuhören bzw. dem Personal im Stationszimmer ein Sprechen in das Patientenzimmer zu ermöglichen. Hierzu hat das Überwachungs-Endgerät 19 geeignete Einstellmittel (z. B. Softkeys im Rahmen einer Menüführung).

Dieses Leistungsmerkmal kann im übrigen auch mittels einer PC-Applikation aktiviert werden, wobei dann der PC 19 (mit angeschlossener Hör-/Sprech-Garnitur) die Rolle des Überwachungs-Endgerätes übernimmt. Das Leistungsmerkmal wird dann über eine Applikation mit ISDN-PC-Karte auf diesem PC realisiert. Über die User-User-Signalisierung des Leistungsmerkmals "Bettsprechen" werden bevorzugt folgende Funktionen gesteuert:
1. Hören oder Sprechen
2. Empfangslautstärke
3. Sendelautstärke
4. Am Kopfhörer signalisieren, daß Bettsprechen durchgeführt wird
5. Ein laufendes Gespräch beenden, wenn Bettsprechen durchgeführt werden soll
6. Authentifizierung beim Bettsprechen
7. TV/Radio-Sitzung beenden.

Bei diesem Leistungsmerkmal wird die Freisprecheinrichtung des Patienten vom Überwachungs-Endgerät oder -System aus zwangsweise eingeschaltet. Falls zu diesem Zeitpunkt eine anderweitige Sprachverbindung vom Patienten-Endgerät aus besteht, kann das Betreuungspersonal eine Trennung der bestehenden Verbindung erzwingen und das Überwachungs-Endgerät auf den Handapparat des Patienten-Endgerätes aufschalten. Die Schwester kann eine Steuerung der Freisprecheinrichtung des Patienten insbesondere in den Steuervorgängen "Mikrofon aus/ein" und "Lautstärke" vornehmen. Wird während einer bestehenden Freisprechverbindung der Handapparat abgenommen, wird die Sprechverbindung mit dem Handapparat fortgesetzt und die Freisprecheinrichtung abgeschaltet. Als berechtigte Stellen (Überwachungs-Endgeräte) kommen bei diesem Leistungsmerkmal interne Teilnehmer der TK-Anlage, externe Teilnehmer des öffentlichen Netzes oder Sprachterminals des Lichtrufsystems in Betracht. Die Teilnehmer am öffentlichen Netz können über normale Festnetztelefone oder Mobilfunk-Endgeräte angeschaltet sein, und bei den internen Endgeräten kann es sich um leitungsgebundene Telefone oder Schnurlostelefone handeln. Aus derzeitiger Sicht bevorzugt sind digitale Patiententerminals, die ein Telefon mit ausgewählten ISDN-Merkmalen, eine TV/Radio-Bedienung, einen Kopfhöreranschluß, einen sogenannten Birntaster-Anschluß sowie Lichtruf-, Deckenlicht- und Leselichttaster aufweisen. Es kann sich speziell um ein mobiles Endgerät als Bestandteil einer integrierten DECT-Lösung der TK-Anlage handeln.

Die Übermittlung von Textnachrichten erfolgt bevorzugt auf ASCII-Basis mit ISO-Zeichenvorrat (westeuropäisch mit türkischen Zeichen) von 256 Zeichen über direkte Anzeige mit akustischer Signalisierung einer eingetroffenen Nachricht am patienten- bzw. bewohnerseitigen Endgerät. In der Anlage ist ein relevanter Textvorrat gespeichert, der auf die wichtigsten Benachrichtigungssituationen zugeschnitten ist und in der jeweiligen Situation eine schnelle Benachrichtigung des Patienten ohne aktuelle Erstellung eines neuen Textes ermöglicht.

Der Anpassungs-Server 15 sorgt für die Anpassung zwischen der Nebenstellenanlage 3 und dem Steuerungs-Server 5 und unterhält mehrere B-Kanal-Verbindungen zur TK-Anlage zum Austausch der User-User-Information. Zur Herstellung der Verbindung zum Steuerungs-Server wird ein proprietäres Protokoll benutzt. Der Steuerungs-Server 3 selbst steuert in Bezug auf das Kommunikationsendgerät im Patientenzimmer Funktionen wie Anmelden, Abmelden und Umzug des Patienten und Grundfunktionen des TV-Gerätes (bzw. eines Rundfunkempfangs).

Die Ausführung der Erfindung ist nicht auf das oben beschriebene Beispiel beschränkt, sondern ebenso in einer Vielzahl von Abwandlungen möglich, die im Rahmen fachgemäßen Handelns liegen.

### Bezugszeichenliste

- 1: Kommunikationssystem
- 3: Nebenstellenanlage
- 5: Steuerungs-Server
- 7: Lichtrufgeber
- 9: TV-Gerät
- 11: Kommunikationsendgerät (ISDN-PBK)
- 13: AWD
- 15: Anpassungs-Server
- 17: Amt
- 19: PC
- 21: Überwachungs-Endgerät
- 23: Steuerungssoftware "Bettsprechen"

## Patentansprüche

1. Kommunikationsendgerät (11) zur kombinierten Sprach- und Lichtrufkommunikation, insbesondere Patientenendgerät für den Klinikeinsatz oder Zimmerendgerät für den Wohnheimeinsatz, mit einer integrierten Freisprecheinrichtung, zum Anschluß an eine digitale Telekommunikationsanlage (3),
**dadurch gekennzeichnet, daß**
die Freisprecheinrichtung über die Telekommunikationsanlage mindestens zum Aufbau einer Sprechverbindung mit einem weiteren an die Telekommunikationsanlage angeschlossenen Endgerät oder System (19, 21) steuerbar ist.

2. Kommunikationsendgerät nach Anspruch 1,
**gekennzeichnet durch**
die Ausbildung als Endgerät mit getrennten Signalisierungs- und Sprachkanälen, insbesondere ISDN- oder IP-Endgerät.

3. Kommunikationsendgerät nach Anspruch 1 oder 2,
**dadurch gekennzeichnet, daß**
die Freisprecheinrichtung unabhängig vom Betriebszustand des Kommunikationsendgerätes (11) eingeschaltet werden kann.

4. Kommunikationsendgerät nach einem der vorangehenden Ansprüche,
**dadurch gekennzeichnet, daß**
die Freisprecheinrichtung nach einer Einschaltung von der Telekommunikationsanlage aus am Kommunikationsendgerät ausschaltbar ist.

5. Kommunikationsendgerät nach einem der vorangehenden Ansprüche,
**gekennzeichnet durch**
eine Freisprech-Anzeigeeinrichtung zur akustischen oder optischen Anzeige des Ein-Zustandes der Freisprecheinrichtung.

6. Kommunikationsendgerät nach einem der vorangehenden Ansprüche,
**gekennzeichnet durch**
Steuermittel (23) zur Steuerung der Hör-/Sprech-Lautstärke der Freisprecheinrichtung von dem weiteren Endgerät aus während einer bestehenden Verbindung.

7. Kommunikationsendgerät zur kombinierten Sprach- und Lichtrufkommunikation zum Anschluß an eine digitale Telekommunikationsanlage, insbesondere nach einem der vorangehenden Ansprüche,
**gekennzeichnet durch**
eine Anzeigeeinrichtung und dieser zugeordnete Anzeigesteuermittel zur optischen Ausgabe von an dem weiteren Endgerät (21) eingegebenen Textnachrichten.

8. Kommunikationsendgerät nach einem der vorangehenden Ansprüche,
**gekennzeichnet durch**
eine Sendeeinrichtung zur Meldung des erfolgten Aufbaus einer Sprechverbindung über die Freisprecheinrichtung oder des erfolgten Empfangs einer Textnachricht bei dem Kommunikationsendgerät an das auslösende Endgerät oder System.

9. Kommunikationsendgerät nach Anspruch 7 oder 8,
**gekennzeichnet durch**
eine kombinierte Anzeige-/Eingabeeinrichtung zur interaktiven Menuführung des Benutzers zur Beantwortung übermittelter Sprach- oder Textnachrichten.

10. Kommunikationssystem (1), insbesondere für den Klinikeinsatz, mit einer digitalen Telekommunikationsanlage (3), einer Mehrzahl von an diese angeschlossenen Kommunikationsendgeräten (11) nach einem der vorangehenden Ansprüche und einem Überwachungs-Endgerät oder -System (19, 21), welches zur Steuerung der Freisprecheinrichtungen der Kommunikationsendgeräte und/oder ihrer Anzeigeeinrichtungen (7) ausgebildet ist.

11. Kommunikationssystem nach Anspruch 10,
**dadurch gekennzeichnet, daß**
das Überwachungs-Endgerät (21) oder -System eine Sendeeinrichtung zur Übermittlung einer Textnachricht an ein an die Telekommunikationsanlage (3) angeschlossenes Kommunikationsendgerät (11) zur Anzeige auf einer dort vorgesehenen Anzeigeeinrichtung aufweist, wobei die Sendeeinrichtung mit einer Texteingabe- oder Textspeichereinrichtung verbunden ist.

12. Kommunikationssystem nach Anspruch 10 oder 11,
**dadurch gekennzeichnet, daß**
das Überwachungs-Endgerät (21) oder -System Authentisierungsmittel zur Authentisierungsprüfung des Bedieners aufweist.

13. Verfahren zum Betrieb eines Kommunikationssystems nach einem der Ansprüche 10 bis 12,
**dadurch gekennzeichnet, daß**
im Ansprechen auf ein von einem angeschlossenen Kommunikationsendgerät (11) ausgehenden Lichtrufsignal von dem Überwachungs-Endgerät (21) oder -System aus die Freisprecheinrichtung des rufenden Kommunikationsendgerätes zum Aufbau einer Sprechverbindung aktiviert wird.

14. Verfahren nach Anspruch 13,
**dadurch gekennzeichnet, daß**
während des Bestehens der Sprechverbindung von dem Überwachungs-Endgerät (21) oder -System aus weitere Steuersignale, insbesondere zur Steuerung der Hör-/Sprech-Lautstärke und/oder zum Wiederabbau der Sprechverbindung, an das Kommunikationsendgerät (11) gesandt werden, mit dem die Verbindung besteht.

15. Verfahren zum Betrieb eines Telekommunikationssystems nach einem der Ansprüche 10 bis 12,
**dadurch gekennzeichnet, daß**
im Ansprechen auf ein von einem angeschlossenen Kommunikationsendgerät (11) ausgehenden Lichtrufsignals eine am Überwachungs-Endgerät (21) oder -System eingegebene oder aus einem dort vorgesehenen Textspeicher abgerufene Textnachricht an das rufende Kommunikationsendgerät zur Anzeige auf dessen Anzeigeeinrichtung oder zur Sprachausgabe über dessen Freisprecheinrichtung übermittelt wird.

16. Verfahren nach Anspruch 15 und Anspruch 13 oder 14,
**dadurch gekennzeichnet, daß**
die Textnachricht während einer bestehenden, durch das Überwachungs-Endgerät oder -System (21) gesteuerten Sprechverbindung übermittelt wird.

17. Verfahren nach einem der Ansprüche 13 bis 16,
**dadurch gekennzeichnet, daß**
die Steuerung der Freisprecheinrichtung über die Telekommunikationsanlage und/oder die Übermittlung einer Textnachricht unabhängig vom Betriebszustand des rufenden Telekommunikationsendgerätes ausgeführt wird.

18. Verfahren nach einem der Ansprüche 13 bis 17,
**dadurch gekennzeichnet, daß**
die erfolgte Steuerung, insbesondere Einschaltung, der Freisprecheinrichtung über die Telekommunikationsanlage und/oder der Empfang einer Textnachricht beim Kommunikationsendgerät durch eine Quittungs-Meldung bestätigt wird.
